# EUROPEAN PATENT APPLICATION

(11) **EP 4 825 677 A1**
(43) Date of publication of application: **21.10.2026**
(21) Application number: 24910464.7
(22) Date of filing: 25.11.2024
(51) Int. Cl.: B60T 17/18, B60T 13/74

(54) **ELECTRONIC MECHANICAL BRAKING SYSTEM FOR CONTROL REDUNDANCY, AND WHEEL END BRAKING APPARATUS AND ELECTRIC VEHICLE**

(30) Priority: 28.12.2023 CN 202311851784
(71) Applicant: Huawei Digital Power Technologies Co., Ltd., Shenzhen, Guangdong 518043 (CN)
(72) Inventor: JING, Pengcheng, Shenzhen, Guangdong 518043 (CN); HUANG, Chongxi, Shenzhen, Guangdong 518043 (CN); NI, Hui, Shenzhen, Guangdong 518043 (CN)
(74) Representative: Maiwald GmbH
(86) International application number: PCT/CN2024/134311
(87) International publication number: WO 2025/139530

(57) **Abstract**

This application provides an electro-mechanical brake system, a wheel-end braking apparatus, and an electric vehicle. The electro-mechanical brake system includes two central controllers and four wheel-end braking apparatuses. The two central controllers one-to-one correspond to two brake pedal sensors, each central controller is configured to receive a brake pedal signal output by a brake pedal sensor corresponding to the central controller, and the brake pedal signal is used to indicate a movement state of a brake pedal. The four wheel-end braking apparatuses are configured to output a braking force to brake the electric vehicle. In the electro-mechanical brake system provided in this application, the two brake pedal sensors and the two central controllers are disposed, to implement brake control redundancy of the electric vehicle. When one sensor or one central controller is invalid, the electro-mechanical brake system can still accurately brake the electric vehicle, to improve braking safety and reliability of the electro-mechanical brake system.

## Description

This application claims priority to Chinese Patent Application No. 202311851784.4, filed with the China National Intellectual Property Administration on December 28, 2023 and entitled "ELECTRO-MECHANICAL BRAKE SYSTEM WITH CONTROL REDUNDANCY, WHEEL-END BRAKING APPARATUS, AND ELECTRIC VEHICLE", which is incorporated herein by reference in its entirety.

### TECHNICAL FIELD

This application relates to the field of electric vehicle braking, and in particular, to an electro-mechanical brake system with control redundancy, a wheel-end braking apparatus, and an electric vehicle.

### BACKGROUND

An electro-mechanical brake system develops rapidly due to advantages of a fast response speed and high control precision. However, control performed by using an electrical signal imposes a higher requirement on functional safety of the electro-mechanical brake system. However, currently, most electric vehicles in the market are equipped with only one set of brake-by-wire system. If only one set of brake-by-wire system is equipped, a driving risk of the vehicle may be increased. If a brake pedal sensor or a central controller in the electronic braking system is faulty, a braking failure will be posed, and a great risk is caused to normal safe driving of the electric vehicle.

### SUMMARY

This application provides an electro-mechanical brake system, a wheel-end braking apparatus, and an electric vehicle, to resolve a problem of invalid braking caused by a single-point failure of a brake pedal sensor or a central controller in the electro-mechanical brake system, so as to improve running reliability and safety of the electro-mechanical brake system.

According to a first aspect, this application provides an electro-mechanical brake system, where the electro-mechanical brake apparatus includes two central controllers and four wheel-end braking apparatuses, where the two central controllers one-to-one correspond to two brake pedal sensors, each central controller is configured to receive a brake pedal signal output by a brake pedal sensor corresponding to the central controller, and the brake pedal signal is used to indicate a movement state of a brake pedal; and the four wheel-end braking apparatuses are configured to output a braking force to brake an electric vehicle.

The electro-mechanical brake system provided in this application includes the two mutually redundant brake pedal sensors and the two mutually redundant central controllers. The two brake pedal sensors can more accurately detect the movement state of the brake pedal. In addition, if one of the brake pedal sensors is invalid, the other brake pedal sensor can still independently detect the movement state of the brake pedal, to improve running reliability of the electro-mechanical brake system. The electro-mechanical brake system provided in this application includes the two central controllers. The two central controllers include a primary central controller and a secondary central controller. When the primary central controller is normal, the primary central controller is responsible for controlling the four wheel-end braking apparatuses to output a braking force. When the primary central controller is abnormal and invalid, the secondary central controller may continue to control the four wheel-end braking apparatuses to output a braking force, to avoid a failure of the entire electro-mechanical brake system caused by invalidity of the central controller, so as to improve safety and reliability of the brake system.

In an implementation of the first aspect, the two brake pedal sensors include a first brake pedal sensor and a second brake pedal sensor, the two central controllers include a first central controller and a second central controller, the first central controller is configured to receive a first brake pedal signal output by the first brake pedal sensor, and the second central controller is configured to receive a second brake pedal signal output by the second brake pedal sensor. The first central controller is a primary central controller, and the second central controller is a secondary central controller. The first central controller is configured to: in response to the first central controller being valid and at least one of the first brake pedal signal and the second brake pedal signal being valid, control the four wheel-end braking apparatuses to output a braking force. The second central controller is configured to: in response to the first central controller being invalid and the second central controller being valid, control the four wheel-end braking apparatuses to output a braking force.

In the electro-mechanical brake system provided in this application, when the first central controller is valid, the first central controller controls the four wheel-end braking apparatuses; and when the first central controller is invalid, the second central controller further controls the four wheel-end braking apparatuses. The two mutually redundant central controllers of the electro-mechanical brake system in this application improve braking reliability and safety of the electro-mechanical brake system.

In an implementation of the first aspect, the first brake pedal signal and the second brake pedal signal are used to indicate brake pedal travels. The first central controller is configured to: in response to the first brake pedal signal and the second brake pedal signal being both valid, control, based on a brake travel signal indicating a larger brake pedal travel, the four wheel-end braking apparatuses to output a braking force; and the first central controller is configured to: in response to one of the first brake pedal signal and the second brake pedal signal being valid, control, based on the valid brake pedal signal, the four wheel-end braking apparatuses to output a braking force. If the first central controller, the first brake pedal signal, and the second brake pedal signal are all valid, the first central controller may control, based on the brake pedal signal that indicates a larger brake pedal travel and that is in the two brake pedal signals, the four wheel-end braking apparatuses to output a braking force, to ensure that the wheel-end braking apparatuses can output a sufficient braking force, so as to ensure safety and reliability of a braking process.

In an implementation of the first aspect, the first central controller is configured to: in response to the first brake pedal signal being valid, control, based on the first brake pedal signal, the four wheel-end braking apparatuses to output a braking force. The first central controller is configured to: in response to the first brake pedal signal being invalid and the second brake pedal signal being valid, receive the second brake pedal signal from the second central controller and control, based on the second brake pedal signal, the four wheel-end braking apparatuses to output a braking force.

In this implementation, if the first central controller and the first brake pedal signal are both valid, the first central controller may directly control the wheel-end braking apparatuses to output a braking force based on the first brake pedal signal. This can shorten a signal transmission path, and improve a response speed and control precision of the electro-mechanical brake system. However, if the first central controller is valid, the second central controller is valid, the first brake pedal signal is invalid, and the second brake pedal signal is valid, the first central controller needs to obtain the second brake pedal signal from the second central controller, and then control, based on the second brake pedal signal, the four wheel-end braking apparatuses to output a braking force.

In an implementation of the first aspect, the second central controller is configured to: in response to the first central controller being invalid, the second central controller being valid, and the second brake pedal signal being valid, control, based on the second brake pedal signal, the four wheel-end braking apparatuses to output a braking force. The second central controller is configured to: in response to the first central controller being invalid, the second central controller being valid, the first brake pedal signal being valid, and the second brake pedal signal being invalid, receive the first brake pedal signal from the first central controller and control, based on the first brake pedal signal, the four wheel-end braking apparatuses to output a braking force.

If the first central controller is invalid and the second central controller is valid, the second central controller needs to control the four wheel-end braking apparatuses to output a braking force. In this case, if the second brake pedal signal is valid, the second central controller may directly control, based on the second brake pedal signal, the four wheel-end braking apparatuses to output a braking force. However, if the second brake pedal signal is invalid and the first brake pedal signal is valid, the second central controller needs to first obtain the first brake pedal signal from the first central controller, and then control, based on the first brake pedal signal, the four wheel-end braking apparatuses to output a braking force.

In an implementation of the first aspect, the two brake pedal sensors include a first brake pedal sensor and a second brake pedal sensor, the two central controllers include a first central controller and a second central controller, the first central controller is configured to receive a first brake pedal signal output by the first brake pedal sensor, and the second central controller is configured to receive a second brake pedal signal output by the second brake pedal sensor. The first central controller is configured to: in response to the first central controller being valid and the first brake pedal signal being valid, control, based on the first brake pedal signal, the four wheel-end braking apparatuses to output a braking force. The second central controller is configured to: in response to the second central controller being valid, the second brake pedal signal being valid, and either the first central controller or the first brake pedal signal being invalid, control, based on the second brake pedal signal, the four wheel-end braking apparatuses to output a braking force.

In an implementation of the first aspect, in a braking process of the electric vehicle, the first central controller is configured to: in response to the first brake pedal signal and the second brake pedal signal being both invalid and the first central controller being valid, control the four wheel-end braking apparatuses to output a fixed braking force. The second central controller is configured to: in response to the first brake pedal signal and the second brake pedal signal being both invalid, the first central controller being invalid, and the second central controller being valid, control the four wheel-end braking apparatuses to output the fixed braking force. The fixed braking force is a braking force indicated when a brake pedal opening is a preset opening, and the preset pedal opening is greater than 50%.

When the first brake pedal signal and the second brake pedal signal are both invalid, it is difficult to determine, based on a brake pedal travel, a braking force that needs to be output by the four wheel-end braking apparatuses. In this case, to ensure braking safety, the central controller may control the wheel-end braking apparatuses to output the relatively large fixed braking force. The fixed braking force is a braking force corresponding to a pedal opening greater than 50%. The fixed braking force may be stored in the two central controllers in a form of value. When the first brake pedal signal and the second brake pedal signal are both invalid, the central controller may invoke the fixed braking force to control the four wheel-end braking apparatuses to output the fixed braking force.

In an implementation of the first aspect, each wheel-end braking apparatus includes a wheel-end controller and a brake actuator, the wheel-end controller is configured to: receive a brake control signal and control the brake actuator to output a braking force indicated by the brake control signal, and the wheel-end controller is configured to: in response to the first central controller and the second central controller being both invalid, control the brake actuator to output the fixed braking force.

When the first central controller and the second central controller are both invalid, each wheel-end braking apparatus may independently respond. To be specific, a wheel-end controller of each wheel-end braking apparatus controls a brake actuator to output the fixed braking force.

In an implementation of the first aspect, both the first central controller and the second central controller include housings, and the housing includes a public CAN communication interface and a private CAN communication interface. The first central controller receives a signal from the second central controller through the public CAN communication interface; the second central controller receives a signal from the first central controller through the public CAN communication interface; and the first central controller and the second central controller send signals to four wheel-end controllers through the private CAN communication interfaces or receive signals from the four wheel-end braking apparatuses through the private CAN communication interfaces.

In an implementation of the first aspect, a signal exchanged between the first central controller and the second central controller includes a brake pedal sensor validity signal, and the brake pedal sensor validity signal is used to indicate that the brake pedal signal is valid or invalid.

According to a second aspect, this application provides a wheel-end braking apparatus used for an electric vehicle. The wheel-end braking apparatus includes a wheel-end controller and a brake actuator, the wheel-end controller is configured to control the brake actuator to output a braking force to a brake disc of the electric vehicle, the wheel-end controller is configured to output a braking force based on an indication of the first central controller or the second central controller, the first central controller is configured to receive a first brake pedal signal from a first brake pedal sensor, the second central controller is configured to receive a second brake pedal signal from a second brake pedal sensor. The wheel-end controller is configured to: in response to the first central controller being valid and the first brake pedal signal being valid, control, based on an indication of the first central controller, the brake actuator to output a braking force.

The wheel-end braking apparatus provided in this application may output a braking force based on the indication of the first central controller or an indication of the second central controller. When one of the first central controller and the second central controller is invalid, the wheel-end braking apparatus can still normally output a braking force to brake the electric vehicle. The wheel-end braking apparatus provided in this application can improve braking safety and reliability of the electric vehicle.

In an implementation of the first aspect, the wheel-end controller is configured to: in response to the second central controller and the second brake pedal signal being valid and at least one of the first central controller and the first brake pedal signal being invalid, control, based on an indication of the second central controller, the brake actuator to output a braking force.

In an implementation of the first aspect, the wheel-end controller is configured to: in response to the first central controller and the second central controller being both invalid or the first brake pedal signal and the second brake pedal signal being both invalid, control the brake actuator to output a fixed braking force, where the fixed braking force is a braking force indicated when a brake pedal opening is a preset opening, and the preset pedal opening is greater than 50%.

When the first central controller and the second central controller cannot control the wheel-end braking apparatus to output a braking force, the wheel-end braking apparatus provided in this application can output a relatively large fixed braking force to brake the electric vehicle. In other words, the wheel-end braking apparatus provided in this application can still provide an emergency braking force for the electric vehicle when a control system is invalid, to further improve braking safety and braking reliability of the electric vehicle.

In an implementation of the first aspect, the wheel-end controller includes a control circuit and a power circuit, the brake actuator includes a brake motor and a brake caliper, the power circuit includes three-phase bridge arms, the brake motor includes three-phase windings, midpoints of the three-phase bridge arms of the power circuit are respectively configured to connect to the three-phase windings of the brake motor, the control circuit is configured to control the power circuit to output a brake motor drive current to the three-phase windings of the brake motor, and the brake motor drive current is used to control the brake motor to drive the brake caliper to clamp the brake disc.

According to a third aspect, this application provides an electric vehicle. The electric vehicle includes the electro-mechanical brake system according to any implementation of the first aspect and a drive system. The drive system includes a drive motor and a motor controller. In a braking process of the electric vehicle, the electro-mechanical brake system is configured to output a service braking force, and the drive motor outputs a negative torque as a wheel of the electric vehicle rotates, to output a regenerative braking force.

Beneficial effects of the wheel-end braking apparatus provided in the third aspect of this application are the same as beneficial effects of the electro-mechanical brake system provided in the first aspect of this application, and details are not described herein again.

### BRIEF DESCRIPTION OF DRAWINGS

FIG. 1 is a diagram of an electric vehicle according to an embodiment of this application;
FIG. 2 is a diagram of an electro-mechanical brake system according to an embodiment of this application;
FIG. 3 is a diagram of a structure of a wheel-end braking apparatus according to an embodiment of this application;
FIG. 4 is a diagram of a wheel-end controller according to an embodiment of this application;
FIG. 5 is a diagram of a control architecture of an electro-mechanical brake system according to an embodiment of this application;
FIG. 6 is a diagram of a communication architecture of an electro-mechanical brake system according to an embodiment of this application;
FIG. 7 is a diagram of a structure of a housing of a central controller according to an embodiment of this application;
FIG. 8 is a diagram of running of an electro-mechanical brake system according to an embodiment of this application;
FIG. 9 is a diagram of running of an electro-mechanical brake system in a normal mode according to an embodiment of this application;
FIG. 10a to FIG. 10d are diagrams of running of an electro-mechanical brake system in a single-point failure mode according to an embodiment of this application; and
FIG. 11a and FIG. 11b are diagrams of running of an electro-mechanical brake system in a dual-point failure mode according to an embodiment of this application.

### DESCRIPTION OF EMBODIMENTS

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include an expression like "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in still some other embodiments" that appear at different places in this specification do not necessarily mean referring to a same embodiment. Instead, the statements mean "one or more but not all of embodiments", unless otherwise specifically emphasized in another manner. The terms "include", "comprise", "have" and their variants all mean "include but are not limited to", unless otherwise specifically emphasized in another manner.

The electro-mechanical brake system has various advantages such as simple layout and fast response, and has become a main direction for technical development of a future braking system. However, the electro-mechanical brake system cancels a hydraulic connection and uses electrical signal transmission, and therefore the electro-mechanical brake system imposes a higher requirement on functional safety. Currently, most autonomous driving vehicles in the market are equipped with only one set of control system. If only one set of control system is equipped, a driving risk of the vehicle may be increased. If a central controller or a brake pedal sensor in the system is faulty, a braking failure is posed, causing a huge safety risk of driving the autonomous driving vehicles. Based on the foregoing problem, this application provides an electro-mechanical brake system, a wheel-end braking apparatus, and an electric vehicle.

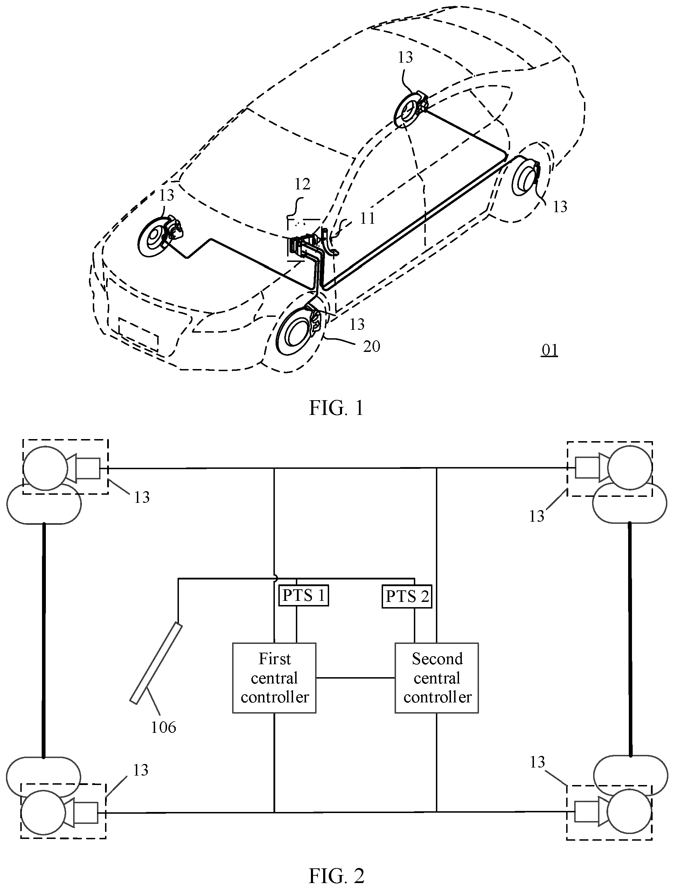

FIG. 1 is a diagram of a scenario of an electric vehicle 01 according to an embodiment of this application. Refer to FIG. 1. The electric vehicle 01 includes an electro-mechanical brake system 10 and four wheels 20. In a braking process of the electric vehicle 01, the electro-mechanical brake system 10 is configured to provide a braking force for the four wheels 20.

FIG. 2 is a diagram of the electro-mechanical brake system 10 according to an embodiment of this application. As shown in FIG. 2, the electro-mechanical brake system 10 includes two brake pedal sensors, two central controllers, and four wheel-end braking apparatuses 13. Each brake pedal travel sensor is configured to output a brake pedal signal, and the brake pedal signal is used to indicate a movement state of a brake pedal. The two central controllers one-to-one correspond to the two brake pedal sensors. Each central controller is configured to receive a brake pedal signal output by a brake pedal sensor corresponding to the central controller. In response to the brake pedal signal, one of the central controllers is configured to control the four wheel-end braking apparatuses 13 to output a braking force.

Further refer to FIG. 2. The two brake pedal sensors include a first brake pedal sensor PTS 1 and a second brake pedal sensor PTS 2, and the two central controllers include a first central controller 121 and a second central controller 122. The first brake pedal sensor PTS 1 is connected to the first central controller 121, and the second brake pedal sensor PTS 2 is connected to the second central controller 122. The first central controller 121 is configured to receive a first brake pedal signal output by the first brake pedal sensor PTS 1, and the second central controller 122 is configured to receive a second brake pedal signal output by the second brake pedal sensor.

The first brake pedal sensor PTS 1 and the second brake pedal sensor PTS 2 may be brake pedal displacement sensors, or may be brake pedal pressure sensors. The brake pedal displacement sensor is configured to monitor a movement angle of a brake pedal. The central controller calculates a brake pedal travel based on the movement angle of the brake pedal sensor from the brake pedal displacement sensor, to obtain a braking force requirement of the electric vehicle 01. The brake pedal pressure sensor is configured to monitor a pressure applied to a brake pedal. The central controller correspondingly calculates a brake travel based on the pressure applied to the brake pedal, to obtain a braking force requirement of the electric vehicle 01. In addition, the first brake pedal sensor PTS 1 and the second brake pedal sensor PTS 2 may alternatively be sensors of another type.

The electro-mechanical brake system 10 provided in this application includes the two mutually redundant brake pedal sensors and the two mutually redundant central controllers. The two brake pedal sensors can more accurately detect the movement state of the brake pedal. In addition, if one of the brake pedal sensors is invalid, the other brake pedal sensor can still independently detect the movement state of the brake pedal, to improve running reliability of the electro-mechanical brake system 10. The electro-mechanical brake system provided in this application includes the two central controllers. The two central controllers include a primary central controller, namely, the first central controller 121, and a secondary central controller, namely, the second central controller 122. When the primary central controller is normal, the primary central controller is responsible for controlling the four wheel-end braking apparatuses 13 to output a braking force. When the primary central controller is abnormal and invalid, the secondary central controller may continue to control the four wheel-end braking apparatuses 13 to output a braking force, to avoid a failure of the entire electro-mechanical brake system 10 caused by invalidity of the central controller, so as to improve safety and reliability of the brake system.

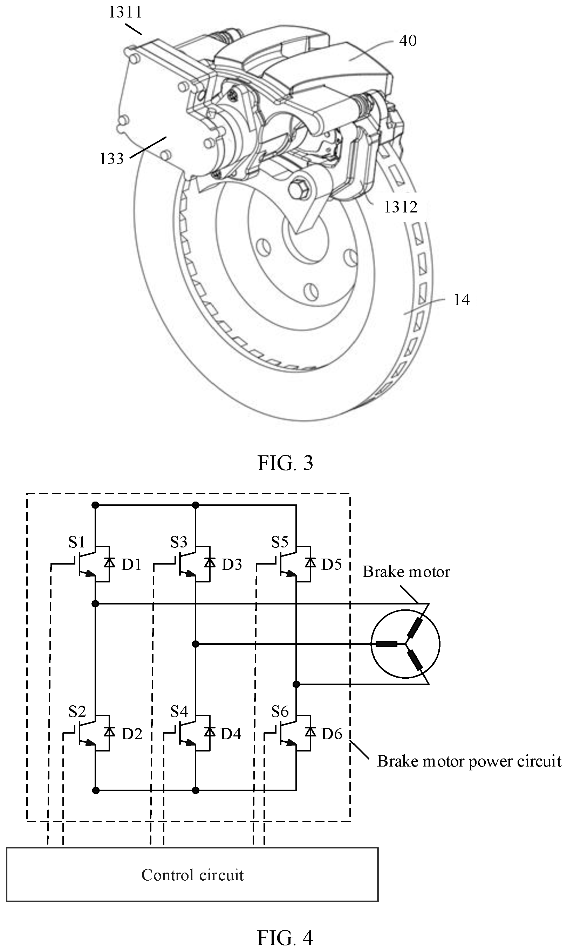

FIG. 3 is a diagram of a structure of the wheel-end braking apparatus 13 according to an embodiment of this application. As shown in FIG. 3, the wheel-end braking apparatus 13 includes a wheel-end controller 133 and a brake actuator 131. The brake actuator 131 includes a brake motor 1311 and a brake caliper 1312. In a braking process of the electric vehicle 01, the wheel-end controller 133 controls the brake motor 1311 to drive the brake caliper 1312 to clamp a brake disc 14 of the electric vehicle 01, to provide a braking force for the electric vehicle 01. A specific structure of the wheel-end braking apparatus 13 is not limited to the structure shown in FIG. 3, and may alternatively be various other possible structures.

FIG. 4 is a diagram of a structure of a wheel-end controller according to an embodiment of this application. As shown in FIG. 4, the wheel-end controller includes a control circuit and a brake motor power circuit. The brake motor power circuit includes three-phase bridge arms. The brake motor 1311 includes three-phase windings. Midpoints of the three-phase bridge arms of the power circuit are respectively configured to connect to the three-phase windings of the brake motor, the control circuit is configured to control the power circuit to output a brake motor drive current to the three-phase windings of the brake motor 1311, and the brake motor drive current is used to control the brake motor 1311 to drive the brake caliper 1312 to clamp the brake disc 14.

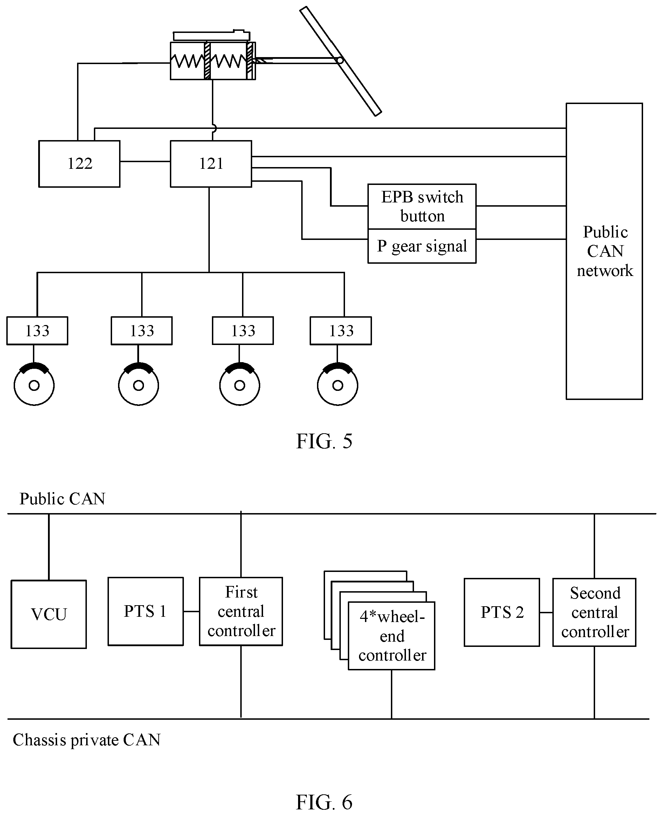

FIG. 5 and FIG. 6 each are further a diagram of a communication control architecture of the electro-mechanical brake system 10. As shown in FIG. 5 and FIG. 6, the first central controller 121 and the second central controller 122 are both connected to a public CAN network of the electric vehicle 01. The first central controller 121 and the second central controller 122 may communicate with each other through the public CAN network, or may directly communicate with each other through a hard wire. In addition, the first central controller 121 and the second central controller 122 may also communicate with another controller of the electric vehicle 01 through the public CAN network. For example, the first central controller 121 and the second central controller 122 may communicate with a vehicle control unit. For the electric vehicle 01 having an energy regeneration function, a required energy regeneration intensity of the electric vehicle 01 may be calculated through interaction between the vehicle control unit and the electro-mechanical brake system 10.

Four wheel-end controllers communicate with the central controller through a chassis private CAN network. The two central controllers may send brake control signals to the wheel-end controllers through the chassis private CAN network, to control the wheel-end braking apparatuses 13 to output a braking force. In addition, the four wheel-end controllers may also send state signals of the wheel-end braking apparatuses 13 to the two central controllers through the chassis private CAN network, for example, a current temperature of the brake motor 1311, a torque currently output by the brake motor 1311, and a clamping force state signal output by the brake caliper 1312.

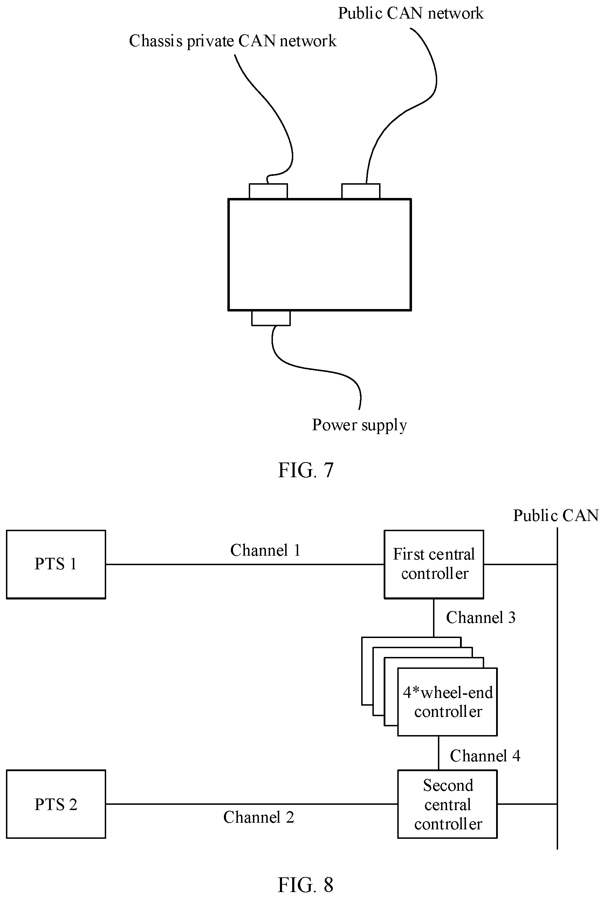

Both the first central controller 121 and the second central controller 122 include housings. A structure of the housing of the central controller is shown in FIG. 7. The housing includes a public CAN communication interface, a private CAN communication interface, and a power supply interface. The first central controller 121 and the second central controller 122 communicate with each other through the public CAN communication interface. The second central controller 122 receives a signal from the first central controller 121 through the public CAN communication interface, and the first central controller 121 receives a signal from the second central controller 122 through the public CAN communication interface. The first central controller 121 and the second central controller 122 send signals to the four wheel-end controllers through private CAN communication interfaces, or receive signals from the four wheel-end braking apparatuses 13 through private CAN communication interfaces. The central controller receives power supplied by a low-voltage battery through the power supply interface.

It should be particularly emphasized that signals exchanged between the first central controller 121 and the second central controller 122 include a brake pedal sensor validity signal and a central controller validity signal. Signals sent by the first central controller 121 and the second central controller 122 to the four wheel-end controllers also include the brake pedal sensor validity signal and the central controller validity signal.

The brake pedal sensor validity signal is used to indicate that a brake pedal signal is valid or invalid. The central controller validity signal is used to indicate that a central controller is valid or invalid.

The first central controller 121 is used as an example. The first central controller 121 may determine, based on the first brake pedal signal sent by the first brake pedal sensor PTS 1, whether the first brake pedal sensor PTS 1 is valid, and output a brake pedal sensor validity signal. When a state indicated by the brake pedal sensor validity signal generated by the first central controller 121 is valid, the first brake pedal signal is valid. In other words, a braking decision can be made based on the first brake pedal signal. When a state indicated by the brake pedal sensor validity signal generated by the first central controller 121 is invalid, the first brake pedal signal is invalid. In other words, a braking decision cannot be made based on the first brake pedal signal. The first central controller 121 may send the brake pedal sensor validity signal to the second central controller 122 and the four wheel-end controllers, to notify the second central controller 122 and the four wheel-end controllers of a current valid state of the first brake pedal signal.

In addition, the first central controller 121 may monitor a state of the first central controller 121 and generate a central controller validity signal. When the first central controller 121 can work normally, a state of a central controller indicated by the central controller validity signal output by the first central controller 121 is valid. When the central controller cannot work normally, for example, a board is faulty or a power supply is faulty, a state of a central controller indicated by the central controller validity signal output by the first central controller 121 is invalid, indicating that the central controller cannot work normally in this case. Similarly, the first central controller 121 may send the central controller validity signal to the second central controller 122 and the four wheel-end controllers, to notify the second central controller 122 and the four wheel-end controllers of a current valid state of the first central controller 121. The second central controller 122 may also generate a brake pedal sensor valid-bit and a central controller validity signal, to notify the first central controller 121 and the four wheel-end controllers of states indicating whether the second brake pedal signal and the second central controller 122 are valid.

In an embodiment, when the first central controller 121 is invalid, the first central controller 121 loses a capability of communicating with the second central controller 122. In other words, when the second central controller 122 or the four wheel-end controllers cannot receive a signal from the first central controller 121, the second controller and the four wheel-end controllers may determine that the first central controller 121 is invalid. Similarly, when the first central controller 121 or the four wheel-end controllers cannot receive a signal from the second central controller 122, the second central controller 122 and the four wheel-end controllers may determine that the first central controller 121 is invalid.

FIG. 8 is a diagram of signal transmission of the electro-mechanical brake system 10 according to an embodiment of this application. As shown in FIG. 8, a signal is transmitted between the first brake pedal sensor and the first central controller 121 through a channel 1. Specifically, after collecting a movement state signal of the brake pedal, the first brake pedal sensor PTS 1 sends the first brake pedal signal to the first central controller 121 through the channel 1.

A signal is transmitted between the second brake pedal sensor and the second central controller 122 through a channel 2. After collecting a movement state signal of the brake pedal, the second brake pedal sensor PTS 2 sends the second brake pedal signal to the second central controller 122 through the channel 2.

The first central controller 121 communicates with the four wheel-end controllers through a channel 3. Signals sent by the four wheel-end controllers to the first central controller 121 through the channel 3 include a wheel-end state signal, a wheel-end controller validity signal, and the like. The wheel-end state signal is used to indicate a current state of the wheel-end braking apparatus 13, and specifically includes a temperature of the brake motor 1311, a rotor position angle of the brake motor 1311, a clamping force output by the brake actuator 131, and the like. The wheel-end controller validity signal is used to indicate that a state of the wheel-end controller is valid or invalid. A second brake pedal sensor validity signal is used to indicate that a state of the second brake pedal signal is valid or invalid. Signals sent by the first central controller to the wheel-end controllers include the central controller validity signal and a first brake pedal sensor validity signal.

The second central controller 122 communicates with the four wheel-end controllers through a channel 4. A manner of communication between the second central controller 122 and the four wheel-end controllers is the same as that of communication between the first controller 121 and the four wheel-end controllers.

The first central controller 121 communicates with the second central controller 122 through the public CAN network of the electric vehicle 01. Signals exchanged between the first central controller 121 and the second central controller 122 include the brake pedal sensor validity signal, the central controller validity signal, and the like. Specifically, the first central controller 121 is configured to send a validity signal of the first brake pedal sensor PTS 1 and a validity signal of the first central controller 121 to the second central controller 122, which are respectively used to indicate a valid state of the first brake pedal sensor PTS 1 and a valid state of the first central controller 121. The second central controller 122 is configured to send a validity signal of the second brake pedal sensor PTS 2 and a validity signal of the second central controller 122 to the first central controller 121, which are respectively used to indicate a valid state of the second brake pedal sensor PTS 2 and a valid state of the second central controller 122.

The channel 1, the channel 2, the channel 3, and the channel 4 herein are signal transmission paths, and specific forms of the signal transmission paths depend on connection manners between modules, for example, common signal transmission paths are a hardwire connection or a CAN bus connection.

The electro-mechanical brake system 10 provided in embodiments of this application is provided with two brake pedal sensors and two central controllers, to implement a redundancy design of a control system. The electro-mechanical brake system 10 provided in embodiments of this application can still accurately control the four wheel-end braking apparatuses 13 to provide a braking force when a single-point failure occurs in the brake pedal sensor or the central controller, so as to improve braking safety and reliability of the electric vehicle 01. According to different invalid cases of the two brake pedal sensors and the two central controllers, the electro-mechanical brake system 10 provided in embodiments of this application has corresponding different running modes to ensure that the electro-mechanical brake system 10 can work reliably. The following describes in detail different working modes of the electro-mechanical brake system 10 with reference to specific embodiments.

### 1. Normal mode

When the two brake pedal sensors and the two central controllers all can work normally, the electro-mechanical brake system 10 is in a normal working mode. In this case, states indicated by brake pedal sensor validity signals of the first central controller 121 and the second central controller 122 are both valid. In this case, embodiment of this application provide the following control solutions.

In an embodiment, the first central controller 121 controls, based on a first brake pedal signal, four wheel-end braking forces to output a braking force. The first central controller 121 provided in this embodiment of this application is a primary central controller, and the second central controller 122 is a secondary central controller. When the two brake pedal signals and the two central controllers are all valid, the first central controller 121 performs a primary control function. In this case, the first central controller 121 calculates a brake pedal travel based on the first brake pedal signal, calculates a required vehicle braking force based on the brake pedal travel, and performs braking force distribution, to obtain a braking force that needs to be output by each wheel-end braking apparatus 13 and output a brake control signal. A control circuit in the wheel-end controller 133 controls, in response to the brake control signal, a power circuit of the brake motor 1311 to output a corresponding brake motor drive current, to drive the brake motor to output a braking torque. Further, the brake motor 1311 drives the brake caliper 1312 to clamp the brake disc 14 of the electric vehicle 01, to output the braking force indicated by the brake control signal.

The first central controller 121 directly controls, based on the first brake pedal signal, the four wheel-end braking apparatuses 13 to output the braking force, so that a signal path can be shortened, and a control speed and control efficiency in a braking process can be improved.

In an embodiment, in response to the first brake pedal signal and a second brake pedal signal being both valid, the first central controller 121 is configured to control, based on a brake travel signal indicating a larger brake pedal travel, the four wheel-end braking apparatuses 13 to output a braking force. The first brake pedal signal and the second brake pedal signal are used to indicate the brake pedal travels. When the two brake pedal signals are both valid, the first central controller 121 may directly receive the first brake pedal signal, and receive the second brake pedal signal from the second central controller 122, the first central controller 121 may compare the first brake pedal signal with the second brake pedal signal, and then control, based on the brake travel signal indicating the larger brake pedal travel, the four wheel-end braking apparatuses 13 to output a braking force, to ensure braking safety, so as to avoid an insufficient output braking force due to measurement accuracy of the first brake pedal sensor PTS 1.

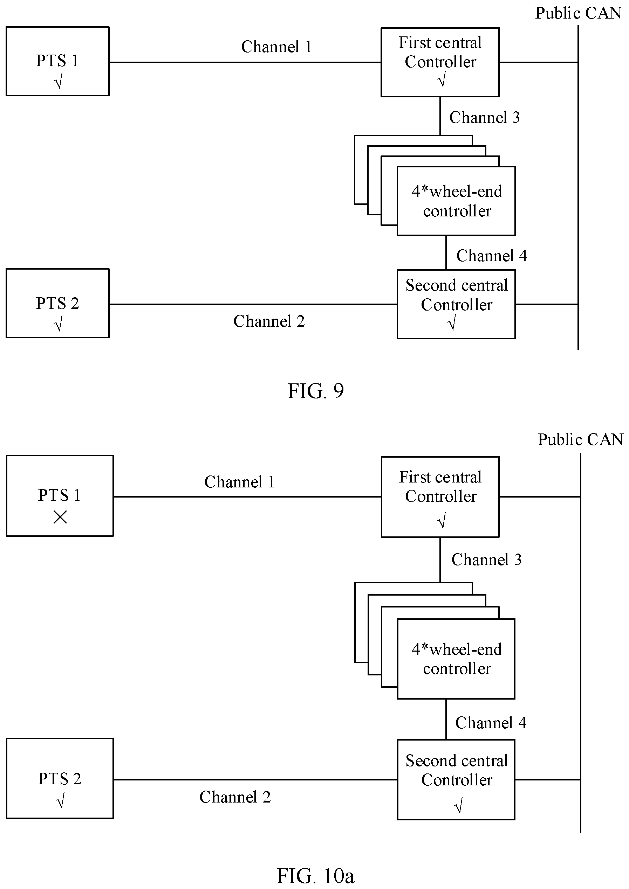

FIG. 9 shows a case in which the electro-mechanical brake system 10 is in the normal mode.

### 2. Single-point failure mode

A single-point failure means that one of the two brake pedal signals or one of the two central controllers is invalid. In this case, the electro-mechanical brake system still retains a part of a control capability or a part of a monitoring capability of a movement state of a brake pedal, so that the electro-mechanical brake system 10 can continue to work normally. Specifically, the following describes in detail a specific case of the single-point failure and a corresponding control manner with reference to specific embodiments.
1. A single brake pedal signal is invalid (the two central controllers are both valid).

In an embodiment, as shown in FIG. 10a, a first brake pedal signal is valid, and a second brake pedal signal is invalid. In this case, the first central controller 121 controls, based on the first brake pedal signal, the four wheel-end braking apparatuses 13 to output a braking force.

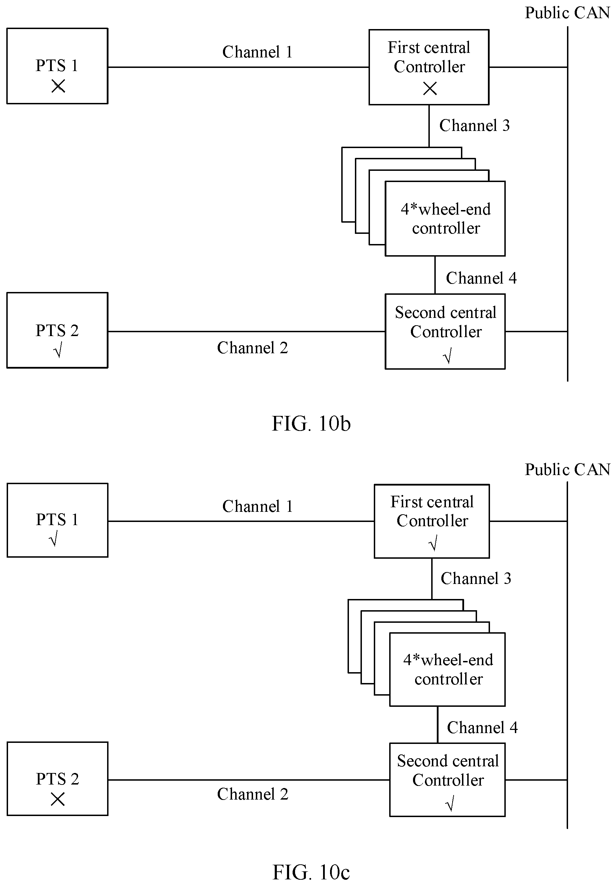

In an embodiment, as shown in FIG. 10c, a first brake pedal signal is valid, and a second brake pedal signal is invalid. In this case, there may be two control manners. In a first control manner, the first central controller 121 obtains the second brake pedal signal from the second central controller 122, and controls, based on the second brake pedal signal, the four wheel-end braking apparatuses 13 to output a braking force. In a second control manner, the second central controller 122 directly controls, based on the second brake pedal signal, the four wheel-end braking apparatuses 13 to output a braking force.

2. A single central controller is invalid (the two brake pedal signals are both valid).

In an embodiment, the first central controller 121 is invalid, and the second central controller 122 is valid. In this case, the second central controller 122 controls, based on a second brake pedal signal, the four wheel-end braking apparatuses 13 to output a braking force.

In an embodiment, the first central controller 121 is valid and the second central controller 122 is invalid. In this case, a control manner of the first central controller 121 is similar to that in the foregoing case, and details are not described herein again.

3. A single brake pedal signal and a single central controller are invalid.

In an embodiment, as shown in FIG. 10b, a first brake pedal signal is invalid and the first central controller 121 is invalid. In this case, the second central controller 122 controls, based on a second brake pedal signal, the four wheel-end braking apparatuses 13 to output a braking force.

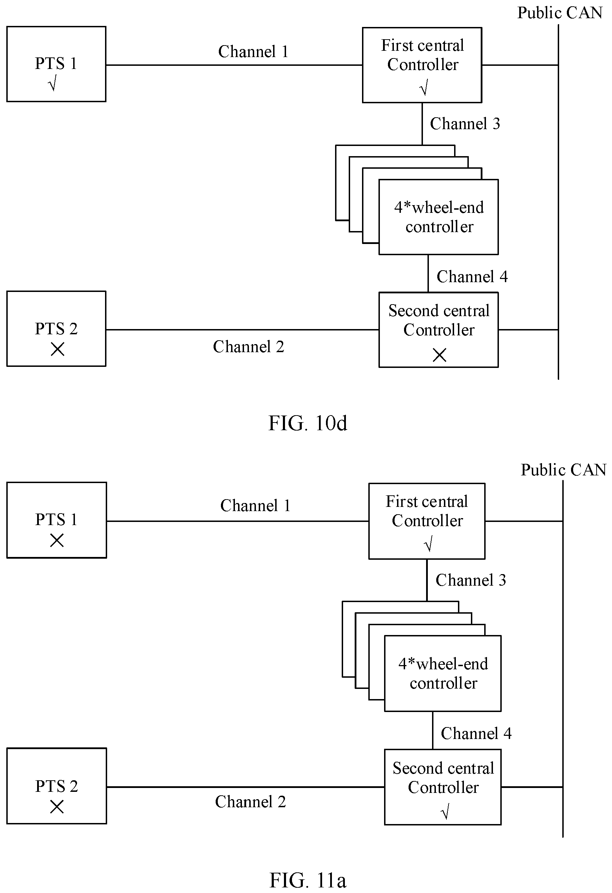

In an embodiment, as shown in FIG. 10d, a second brake pedal signal is invalid and the second central controller 122 is invalid. In this case, the first central controller 121 controls, based on a first brake pedal signal, the four wheel-end braking apparatuses 13 to output a braking force.

It can be learned from the foregoing analysis that the electro-mechanical brake system 10 provided in embodiments of this application is provided with two brake pedal sensors and two central controllers. Each central controller can receive two brake pedal signals. Therefore, when any brake pedal signal is invalid or any central controller is invalid, the electro-mechanical brake system 10 can still precisely control vehicle braking, to improve safety and reliability of the electro-mechanical brake system 10.

### 3. Dual-point failure mode

If pedal sensor signals output by two brake pedal sensors are both invalid or two central controllers are both invalid, neither of the two central controllers can determine a brake pedal travel, or perform calculation based on the brake pedal travel, and control the four wheel-end braking apparatuses 13 to output a braking force. In this case, to ensure braking safety, the four wheel-end apparatuses respectively output fixed braking forces to ensure braking safety.
1. The two brake pedal signals are both invalid.

In an embodiment, as shown in FIG. 11a, the brake pedal signals output by the two brake pedal sensors are both invalid, but the two central controllers are both valid. In this case, the first central controller 121 is configured to control the four wheel-end braking apparatuses 13 to output a fixed braking force.

In an embodiment, the brake pedal signals output by the two brake pedal sensors are both invalid, and one of the two central controllers is invalid. In this case, the central controller in a valid state is configured to control the four wheel-end braking apparatuses 13 to output a fixed braking force.

When a first brake pedal signal and a second brake pedal signal are both invalid, it is difficult to determine, based on a brake pedal travel, a braking force that needs to be output by the four wheel-end braking apparatuses 13. In this case, to ensure braking safety, the central controller may control the wheel-end braking apparatuses 13 to output a relatively large fixed braking force. The fixed braking force is a braking force corresponding to a pedal opening greater than 50%. The fixed braking force may be stored in the two central controllers in a form of value. When the first brake pedal signal and the second brake pedal signal are both invalid, the central controller may invoke the fixed braking force to control the four wheel-end braking apparatuses 13 to output the fixed braking force.

2. The two central controllers are both invalid.

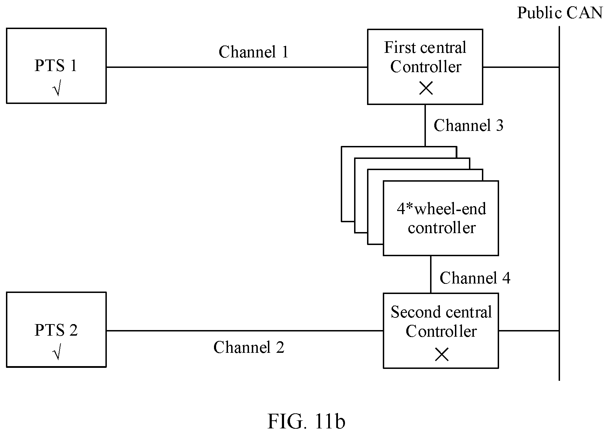

In an embodiment, as shown in FIG. 11b, the two central controllers are both invalid. For example, boards of the two central controllers are faulty, or power supplies of the two central controllers are faulty. As a result, neither of the two central controllers can work normally. In this case, the four wheel-end braking apparatuses 13 can independently output the fixed braking forces.

Specifically, when the two central controllers are both invalid, states indicated by central controller validity signals sent by the two central controllers to the wheel-end controller through a chassis private CAN are invalid, or the two central controllers interrupt communication with the four wheel-end controllers due to a fault. The wheel-end controller controls the brake actuator 131 to output a fixed clamping force, so that a fixed braking force is generated between the brake caliper 1312 and the brake disc 14, to brake the electric vehicle 01.

3. One brake signal and one central controller are invalid.

In an embodiment, a first brake pedal signal is invalid, and the second central controller 122 is invalid. In this case, the first central controller 121 controls the four wheel-end braking apparatuses 13 to output a fixed braking force.

In an embodiment, a second brake pedal signal is invalid, and the first central controller 121 is invalid. In this case, the second central controller 122 controls the four wheel-end braking apparatuses 13 to output a fixed braking force.

With reference to the foregoing analysis, it can be learned that the electro-mechanical brake system provided in embodiments of this application can still output the fixed braking force when two brake pedal signals or two central controllers are both invalid, to control the electric vehicle to stop, so as to avoid out-of-control of the electric vehicle, and further improve safety and reliability of the braking system and the electric vehicle.

Although this application is described with reference to specific features and embodiments thereof, it is clear that various modifications and combinations may be made to them without departing from the scope of this application. Correspondingly, the specification and accompanying drawings are merely example descriptions of this application defined by the appended claims, and are considered as any of or all modifications, variations, combinations or equivalents that cover the scope of this application.

It is clear that a person skilled in the art can make various modifications and variations to this application without departing from the scope of this application. This application is intended to cover these modifications and variations of this application provided that they fall within the scope of protection defined by the following claims of this application and their equivalent technologies.

## Claims

1. An electro-mechanical brake system with control redundancy, wherein the electro-mechanical brake apparatus comprises two central controllers and four wheel-end braking apparatuses, wherein
the two central controllers one-to-one correspond to two brake pedal sensors, each central controller is configured to receive a brake pedal signal output by the brake pedal sensor corresponding to the central controller, and the brake pedal signal is used to indicate a movement state of a brake pedal; and
the four wheel-end braking apparatuses are configured to output a braking force to brake an electric vehicle.

2. The electro-mechanical brake system according to claim 1, wherein the two brake pedal sensors comprise a first brake pedal sensor and a second brake pedal sensor, the two central controllers comprise a first central controller and a second central controller, the first central controller is configured to receive a first brake pedal signal output by the first brake pedal sensor, and the second central controller is configured to receive a second brake pedal signal output by the second brake pedal sensor;
the first central controller is configured to:
in response to the first central controller being valid and at least one of the first brake pedal signal and the second brake pedal signal being valid, control the four wheel-end braking apparatuses to output a braking force; and
the second central controller is configured to:
in response to the first central controller being invalid and the second central controller being valid, control the four wheel-end braking apparatuses to output a braking force.

3. The electro-mechanical brake system according to claim 2, wherein the first brake pedal signal and the second brake pedal signal are used to indicate brake pedal travels, and the first central controller is configured to:
in response to the first brake pedal signal and the second brake pedal signal being both valid, control, based on a brake travel signal indicating a larger brake pedal travel, the four wheel-end braking apparatuses to output a braking force; and
in response to one of the first brake pedal signal and the second brake pedal signal being valid, control, based on the valid brake pedal signal, the four wheel-end braking apparatuses to output a braking force.

4. The electro-mechanical brake system according to claim 2, wherein the first central controller is configured to:
in response to the first brake pedal signal being valid, control, based on the first brake pedal signal, the four wheel-end braking apparatuses to output a braking force; and
in response to the first brake pedal signal being invalid, the second brake pedal signal being valid, and the second central controller being valid, receive the second brake pedal signal from the second central controller and control, based on the second brake pedal signal, the four wheel-end braking apparatuses to output a braking force.

5. The electro-mechanical brake system according to claim 2, wherein the second central controller is configured to:
in response to the first central controller being invalid, the second central controller being valid, and the second brake pedal signal being valid, control, based on the second brake pedal signal, the four wheel-end braking apparatuses to output a braking force.

6. The electro-mechanical brake system according to claim 1, wherein the two brake pedal sensors comprise a first brake pedal sensor and a second brake pedal sensor, the two central controllers comprise a first central controller and a second central controller, the first central controller is configured to receive a first brake pedal signal output by the first brake pedal sensor, and the second central controller is configured to receive a second brake pedal signal output by the second brake pedal sensor;
the first central controller is configured to:
in response to the first central controller being valid and the first brake pedal signal being valid, control, based on the first brake pedal signal, the four wheel-end braking apparatuses to output a braking force; and
the second central controller is configured to:
in response to the second central controller being valid, the second brake pedal signal being valid, and either the first central controller or the first brake pedal signal being invalid, control, based on the second brake pedal signal, the four wheel-end braking apparatuses to output a braking force.

7. The electro-mechanical brake system according to any one of claims 2 to 6, wherein in a braking process of the electric vehicle, the first central controller is configured to:
in response to the first brake pedal signal and the second brake pedal signal being both invalid and the first central controller being valid, control the four wheel-end braking apparatuses to output a fixed braking force; and
the second central controller is configured to:
in response to the first brake pedal signal and the second brake pedal signal being both invalid, the first central controller being invalid, and the second central controller being valid, control the four wheel-end braking apparatuses to output the fixed braking force, wherein
the fixed braking force is a braking force corresponding to when a brake pedal opening is a preset opening, and the preset pedal opening is greater than 50%.

8. The electro-mechanical brake system according to claim 7, wherein each wheel-end braking apparatus comprises a wheel-end controller and a brake actuator, the wheel-end controller is configured to: receive a brake control signal and control the brake actuator to output a braking force indicated by the brake control signal, and the wheel-end controller is configured to:
in response to the first central controller and the second central controller being both invalid, control the brake actuator to output the fixed braking force.

9. The electro-mechanical brake system according to any one of claims 1 to 8, wherein both the first central controller and the second central controller comprise housings, and the housing comprises a public CAN communication interface and a private CAN communication interface;
the first central controller receives a signal from the second central controller through the public CAN communication interface;
the second central controller receives a signal from the first central controller through the public CAN communication interface; and
the first central controller and the second central controller send signals to the four wheel-end controllers through the private CAN communication interfaces or receive signals from the four wheel-end braking apparatuses through the private CAN communication interfaces.

10. The electro-mechanical brake system according to claim 9, wherein a signal exchanged between the first central controller and the second central controller comprises a brake pedal sensor validity signal, and the brake pedal sensor validity signal is used to indicate that the brake pedal signal is valid or invalid.

11. A wheel-end braking apparatus used for an electric vehicle, wherein the wheel-end braking apparatus comprises a wheel-end controller and a brake actuator, the wheel-end controller is configured to control the brake actuator to brake a brake disc of the electric vehicle, the wheel-end controller is configured to output a braking force based on an indication of a first central controller or a second central controller, the first central controller is configured to receive a first brake pedal signal from a first brake pedal sensor, the second central controller is configured to receive a second brake pedal signal from a second brake pedal sensor, the first brake pedal signal and the second brake pedal signal are used to indicate a movement state of a brake pedal of the electric vehicle, and the wheel-end controller is configured to:
in response to the first central controller being valid and the first brake pedal signal being valid, control, based on an indication of the first central controller, the brake actuator to output a braking force.

12. The wheel-end braking apparatus according to claim 11, wherein the wheel-end controller is configured to:
in response to the second central controller being valid, the second brake pedal signal being valid, and at least one of the first central controller and the first brake pedal signal being invalid, control, based on an indication of the second central controller, the brake actuator to output a braking force.

13. The wheel-end braking apparatus according to claim 11 or 12, wherein the wheel-end controller is configured to:
in response to the first central controller and the second central controller being both invalid or the first brake pedal signal and the second brake pedal signal being both invalid, control the brake actuator to output a fixed braking force, wherein the fixed braking force is a braking force indicated when a brake pedal opening is a preset opening, and the preset pedal opening is greater than 50%.

14. The wheel-end braking apparatus according to any one of claims 11 to 13, wherein the wheel-end controller comprises a control circuit and a power circuit, the brake actuator comprises a brake motor and a brake caliper, the power circuit comprises three-phase bridge arms, the brake motor comprises three-phase windings, midpoints of the three-phase bridge arms of the power circuit are respectively configured to connect to the three-phase windings of the brake motor, the control circuit is configured to control the power circuit to output a brake motor drive current to the three-phase windings of the brake motor, and the brake motor drive current is used to control the brake motor to drive the brake caliper to brake the brake disc.

15. An electric vehicle, wherein the electric vehicle comprises the electro-mechanical brake system according to any one of claims 1 to 10 and a drive system, the drive system comprises a drive motor and a motor controller, in a braking process of the electric vehicle, the electro-mechanical brake system is configured to output a service braking force, and the drive motor outputs a negative torque as a wheel of the electric vehicle rotates, to provide a braking force for the electric vehicle.
